(19) Europäisches Patentamt / European Patent Office / Office européen des brevets

(11) **EP 4 579 512 A1**

(12) **EUROPEAN PATENT APPLICATION**
published in accordance with Art. 153(4) EPC

(43) Date of publication:
**02.07.2025   Bulletin 2025/27**

(21) Application number: **22909507.0**

(22) Date of filing: **26.10.2022**

(51) International Patent Classification (IPC):
**G06F 30/23** (2020.01)

(52) Cooperative Patent Classification (CPC):
Y02E 30/30

(86) International application number:
**PCT/CN2022/127785**

(87) International publication number:
**WO 2023/116189 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **22.08.2022   CN 202211008780**

(71) Applicants:
• **China Nuclear Power Engineering Co., Ltd.**
  **Shenzhen, Guangdong 518124 (CN)**
• **China Nuclear Power Design Company Ltd. (Shenzhen)**
  **Shenzhen, Guangdong 518100 (CN)**
• **China General Nuclear Power Corporation**
  **Shenzhen, Guangdong 518026 (CN)**
• **CGN Power Co., Ltd.**
  **Shenzhen, Guangdong 518026 (CN)**

(72) Inventors:
• **MAO, Wanchao**
  **Shenzhen, Guangdong 518124 (CN)**
• **XIE, Hongyun**
  **Shenzhen, Guangdong 518124 (CN)**
• **LU, Chao**
  **Shenzhen, Guangdong 518124 (CN)**
• **WANG, Chunbing**
  **Shenzhen, Guangdong 518124 (CN)**
• **PING, Jialin**
  **Shenzhen, Guangdong 518124 (CN)**
• **DUAN, Qizhi**
  **Shenzhen, Guangdong 518124 (CN)**
• **FAN, Yipeng**
  **Shenzhen, Guangdong 518124 (CN)**

(74) Representative: **Westphal, Mussgnug  & Partner, Patentanwälte mbB**
  **Werinherstraße 79**
  **81541 München (DE)**

(54) **NEUTRONICS/THERMAL-HYDRAULICS COUPLING METHOD AND SYSTEM FOR THREE-DIMENSIONAL REACTOR CORE OF PRESSURIZED WATER REACTOR**

(57)    Disclosed in the present invention are a neutronics/thermal-hydraulics coupling method and system for a three-dimensional reactor core of a pressurized water reactor. The method comprises: according to section parameter information and by using a nonlinear iterative coarse mesh finite difference method and a θ-Method, performing three-dimensional steady-state and transient neutron diffusion calculation; generating a reactor core physical program, and establishing a corresponding physical model according to the material arrangement and geometric dimensions of a reactor core; compiling the reactor core physical program into a dynamic link library, and also storing the physical model in the dynamic link library; calling the dynamic link library, and receiving and obtaining a simulation result output by the reactor core physical program; calling a dynamic link library compiled from a thermal-hydraulic program, and receiving and obtaining a simulation result output by the thermal-hydraulic program; performing exchange transfer on physical parameters between the reactor core physical program and the thermal-hydraulic program, and establishing a mapping relationship between a reactor core physical program mesh and the thermal-hydraulic program mesh according to the material arrangement of the reactor core. By means of the implementation of the invention, the efficient and accurate external coupling of a reactor core physical program and the thermal-hydraulic program is realized.

**(Cont. next page)**

EP 4 579 512 A1

performing three-dimensional steady-state and transient-state neutron diffusion calculation by using a nonlinear iterative coarse-mesh finite difference method and a θ-Method according to section parameter information;  S10

generating a reactor core physical program, and establishing a corresponding physical model according to the material arrangement and the geometric dimension of the reactor core;  S20

compiling the reactor core physical program into a dynamic link library, and storing the physical model in the dynamic link library;  S30

calling the dynamic link library, and receiving the simulation result output by the reactor core physical program;  S40

calling a dynamic link library compiled by the thermal-hydraulic program, and receiving a simulation result output by the thermal-hydraulic program;  S50

exchanging and transferring physical parameters between the reactor core physical program and the thermal-hydraulic program;  S60

establishing a mapping relationship between the reactor core physical program mesh and the thermal-hydraulic program mesh according to the material arrangement of the reactor core.  S70

FIG.1

**Description**

TECHNICAL FIELD

The invention relates to the technical field of neutronics/thermal-hydraulics coupling calculation for PWR core, in particular to a neutronics/thermal-hydraulics coupling method and system for three-dimensional reactor core of pressurized water reactor.

DESCRIPTION OF RELATED ART

The reactor high-precision integrated simulation system is the simulation support environment of the nuclear safety critical system assimilation platform technology, and the core of the nuclear safety critical system assimilation platform. It mainly comprises a high-resolution and high-precision nuclear reactor numerical calculation model, simultaneously needs to meet the real-time requirement, can describe the physical mechanism of a reactor in steady-state and transient process, It truly represents the physical phenomena of various operating conditions and accident conditions, and provides theoretical support and data engine for the assimilation platform.

At present, the NESTLE neutronic program and the RELAP5 thermal-hydraulic program have been coupled for use in simulation system simulations. NESTLE is a three-dimensional neutronics transient code developed by North Carolina State University, which has quarter-core and full-core computing capability. It uses the nodal expansion method to realize the discrete solution of three-dimensional space mesh, and combines with the coarse-mesh finite difference method to improve the computing speed. RELAP5 was developed by Idaho National Engineering Laboratory as a safety review process for the United States Nuclear Regulatory Commission. The process uses a two-fluid six-equation model, which is mainly suitable for PWR thermal-hydraulic analysis. It can not only simulate the transient calculation of LWR in any case, but also calculate the non-nuclear system. It has a very strong thermal-hydraulic calculation ability of PWR system.

According to the technical scheme, the neutronics program and the thermal-hydraulic program are combined at a code level, the key physical quantity transferred in the middle is directly transferred through a variable at the code level, and then the neutronics program and the thermal-hydraulic program are compiled into a dynamic link library for use, so that the dynamic link library is used in a black box mode, and internal code logic and data transfer logic are not clear. The model cannot be adjusted according to the specific type and arrangement of PWR, which has great limitation and limited application.

BRIEF SUMMARY OF THE INVENTION

The technical problem to be solved by the present invention is to provide a neutronics/thermal-hydraulics coupling method and system for three-dimensional reactor core of pressurized water reactor, with respect to at least one defect in the related art mentioned in the above background art that a neutronics program and a thermal-hydraulic program cannot be externally coupled, and thus a high-precision simulation requirement cannot be obtained.

The technical solution adopted by the present invention to solve its technical problem is to construct a neutronics/thermal-hydraulics coupling method for three-dimensional reactor core of pressurized water reactor, comprises the following steps:

> S10, performing three-dimensional steady-state and transient-state neutron diffusion calculation by using a nonlinear iterative coarse- mesh finite difference method and a θ-Method according to section parameter information,
> S20, generating a reactor core physical program, and establishing a corresponding physical model according to the material arrangement and the geometric dimension of the reactor core;
> S30, compiling the reactor core physical program into a dynamic link library, and storing the physical model in the dynamic link library;
> S40, calling the dynamic link library, and receiving the simulation result output by the reactor core physical program;
> S50, calling a dynamic link library compiled by the thermal-hydraulic program, and receiving a simulation result output by the thermal-hydraulic program;
> S60, exchanging and transferring physical parameters between the reactor core physical program and the thermal-hydraulic program;
> S70, establishing a mapping relationship between the reactor core physical program mesh and the thermal-hydraulic program mesh according to the material arrangement of the reactor core.

Preferably, in the neutronics/thermal-hydraulics coupling method for three-dimensional reactor core of pressurized water reactor, before the step S10, it further comprises:

S00, obtaining a feedback value of the section parameter information according to the state information of each fuel assembly;

S01, calculating the steady-state poison nucleon density at the initial moment of simulation, setting the steady-state poison nucleon density as the initial poison nucleon density, and calculating the transient-state poison nucleon density in real time in the simulation process;

And S02, processing the section of the semi-inserted segment of the control rod to obtain the real state of the section reaction of the segment.

Preferably, in the neutronics/thermal-hydraulics coupling method for three-dimensional reactor core of pressurized water reactor of the present invention, The state information of the fuel assembly comprises a basic section coefficient, a coolant temperature fitting coefficient, a fuel temperature fitting coefficient, a boron concentration fitting coefficient, and a coolant density fitting coefficient; and a difference value between the coolant temperature and a reference operating condition, a difference value between the fuel temperature and the reference operating condition, a difference valve between the boron concentration and the reference operating condition as well as a difference valve between the coolant density and the reference operating condition.

Preferably, in the neutronics/thermal-hydraulics coupling method for three-dimensional reactor core of pressurized water reactor of the present invention, the processing the section of the semi-inserted segment of the control rod comprises:

Obtaining a uniform section of the mesh region by subjecting the mesh region of the control rod at the insertion portion of the segment to section processing.

Preferably, in the neutronics/thermal-hydraulics coupling method for three-dimensional reactor core of pressurized water reactor according to the present invention, the physical parameters comprise boron concentration, fuel temperature, coolant temperature, coolant density, xenon samarium poison nucleus density and power distribution.

Preferably, in the neutronics/thermal-hydraulics coupling method for three-dimensional reactor core of pressurized water reactor of the present invention, the exchanging and transferring of the physical parameters comprises:

Transmitting the power distribution calculated by the core physical program to the thermal-hydraulic program, and transmitting the boron concentration, the fuel temperature distribution, the coolant temperature distribution, and the coolant density distribution calculated by the thermal-hydraulic program to the reactor core physical program.

Preferably, in the neutronics/thermal-hydraulics coupling method for three-dimensional reactor core of pressurized water reactor of the present invention, the step of establishing a mapping relationship between the reactor core physical program mesh and the thermal-hydraulic program mesh comprises:

Corresponding each component of the reactor core physical program to a mesh, dividing the reactor core into a plurality of regions radially in the thermal-hydraulic mesh, and mapping each parameter in the thermal-hydraulic mesh in the form of a single mesh in the reactor core physical program mesh; Transmitting a parameter of the thermal-hydraulic program mesh to all the reactor core physical program meshs in the region in the thermal-hydraulic program mesh.

The invention also constructs a neutronics/thermal-hydraulics coupling system for three-dimensional reactor core of pressurized water reactor, which comprises:

a neutron diffusion calculation module is used for performing three-dimensional steady-state and transient-state neutron diffusion calculation by using a nonlinear iteration coarse-mesh finite difference method and a θ-Method according to section parameter information

A generation module is used for generating a reactor core physical program and establishing a corresponding physical model according to the material arrangement and the geometric dimension of the reactor core;

a compiling module is used for compiling the reactor core physical program into a dynamic link library and storing the physical model in the dynamic link library;

a first calling module is used for calling the dynamic link library and receiving the simulation result output by the reactor core physical program;

a second calling module is used for calling a dynamic link library compiled from a thermal-hydraulic program, and receiving a simulation result output by the thermal-hydraulic program;

a data exchange module is used for exchanging and transferring physical parameters between the reactor core physical program and the thermal-hydraulic program;

And a mesh mapping module is used for establishing a mapping relationship between the reactor core physical program mesh and the thermal-hydraulic program mesh according to the material arrangement of the reactor core.

Preferably, in the neutronics/thermal-hydraulics coupling system for three-dimensional reactor core of pressurized water reactor of the present invention, the system further comprises:

a feedback module is used for obtaining a feedback value of the section parameter information according to the state information of each fuel assembly;

a calculation module is used for calculating the steady-state poison nucleon density at the initial moment of simulation, setting the steady-state poison nucleon density as the initial poison nucleon density, and calculating the transient-state poison nucleon density in real time in the simulation process;

And a processing module is used for processing the section of the semi-inserted segment of the control rod to obtain the real state of the section reaction of the segment.

Preferably, in the neutronics/thermal-hydraulics coupling system for three-dimensional reactor core of pressurized water reactor of the present invention, The state information of the fuel assembly comprises a basic section coefficient, a coolant temperature fitting coefficient, a fuel temperature fitting coefficient, a boron concentration fitting coefficient, and a coolant density fitting coefficient; and a difference value between the coolant temperature and a reference operating condition, a difference value between the fuel temperature and the reference operating condition, a difference valve between the boron concentration and the reference operating condition as well as a difference valve between the coolant density and the reference operating condition.

Preferably, in the neutronics/thermal-hydraulics coupling system for three-dimensional reactor core of pressurized water reactor of the present invention, the processing module is further used for:

Obtaining a uniform section of the mesh region by subjecting the mesh region of the control rod at the insertion portion of the segment to section processing.

Preferably, in the neutronics/thermal-hydraulics coupling system for three-dimensional reactor core of pressurized water reactor of the present invention, the physical parameters include boron concentration, fuel temperature, coolant temperature, coolant density, xenon samarium poison nucleus density and power distribution.

Preferably, in the neutronics/thermal-hydraulics coupling system for three-dimensional reactor core of pressurized water reactor of the present invention, the exchanging and transferring the physical parameters comprises:

Transmitting the power distribution calculated by the core physical program to the thermal-hydraulic program, and transmitting the boron concentration, the fuel temperature distribution, the coolant temperature distribution, and the coolant density distribution calculated by the thermal-hydraulic program to the core physical program.

Preferably, in the neutronics/thermal-hydraulics coupling system for three-dimensional reactor core of pressurized water reactor of the present invention, the data exchange module is further used for:

Corresponding each component of the reactor core physical program to a mesh, dividing the reactor core into a plurality of regions radially in the thermal hydraulic mesh, and mapping each parameter in the thermal-hydraulic mesh in the form of a single mesh in the reactor core physical program mesh; Transmitting a parameter of the thermal-hydraulic program mesh to all the reactor core physical program meshs in the region in the thermal-hydraulic program mesh.

By implement the invention, the following beneficial effect are achieved:

The invention discloses a neutronics/thermal-hydraulics coupling method and system for three-dimensional reactor core of pressurized water reactor. Three-dimensional steady state and transient state neutron diffusion calculation is carried out on a pressurized water reactor simulation platform according to section parameter information to obtain a reactor core physical program, and a corresponding physical model is established according to the actual arrangement condition of the reactor core; Compiling a reactor core physical program into a dynamic link library, calling the dynamic link library to obtain a simulation result output by the reactor core physical program, calling the dynamic link library compiled by a thermal-hydraulic program, receiving the simulation result output by the thermal hydraulic program, exchanging physical parameters of the simulation results in a platform, and realizing reactor core nuclear thermal coupling calculation of simulation. The mapping relationship between the core physics code mesh and the thermal-hydraulic code mesh is obtained for the actual core arrangement. The reactor core physical program and the thermal-hydraulic program developed by the invention are externally coupled, so that the limitation that the reactor core physical program and the thermal-hydraulic program are coupled completely in a black box is broken, and geometric modeling and meshing can be carried out aiming at a specific reactor core, and functions are added to meet the requirements of simulation development of a pressurized water reactor..

BRIEF DESCRIPTION OF THE SEVERAL VIEWS OF THE DRAWINGS

The present invention will be further described with reference to the accompanying drawings and embodiments, in which:

FIG. 1 is a schematic flow chart of a neutronics/thermal-hydraulics coupling method for three-dimensional reactor core of pressurized water reactor according to the present invention;
FIG. 2 is a schematic representation of a cross-sectional treatment of a control rod insertion segment of the present invention;
FIG. 3 is a schematic diagram of the physical parameter exchange transfer of the present invention;

FIG. 4 is a mapping diagram of a core physical program mesh and a thermal-hydraulics program mesh according to the present invention;

FIG. 5 is a block diagram of the neutronics/thermal-hydraulics coupling system for three-dimensional reactor core of pressurized water reactor of the present invention.

DETAILED DESCRIPTION OF THE INVENTION

For a clearer understanding of the technical features, objects, and effects of the present invention, specific embodiments of the present invention will now be described in detail with reference to the accompanying drawings.

It should be noted that the flowcharts shown in the drawings are only illustrative and do not necessarily include all of the elements and operations/steps, nor are they necessarily performed in the order described. For example, some operations/steps can be decomposed, while others can be combined or partially combined, so the actual order of execution may change according to the actual situation.

The block diagrams shown in the drawings are merely functional entities and do not necessarily correspond to physically separate entities. That is, these functional entities may be implemented in the form of software, or in one or more hardware modules or integrated circuits, or in different network and/or processor devices and/or microcontroller devices.

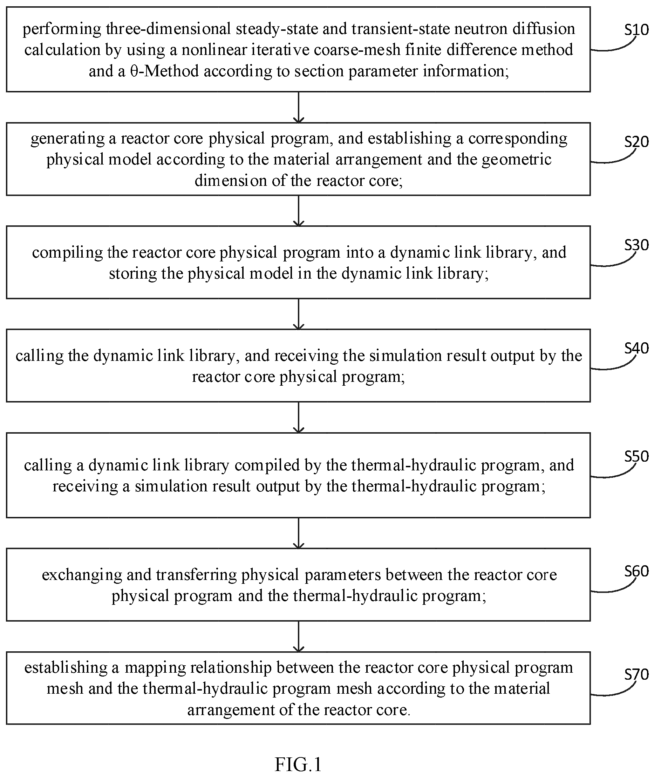

In this embodiment, as shown in FIG. 1, the present invention constructs a neutronics/thermal-hydraulics coupling method for three-dimensional reactor core of pressurized water reactor, which comprises the following steps:

S10, performing three-dimensional steady-state and transient-state neutron diffusion calculation by using a nonlinear iterative coarse-mesh finite difference method and a $\theta$-Methods according to the section parameter information

S20, generating a reactor core physical program, and establishing a corresponding physical model according to the material arrangement and the geometric dimension of the reactor core;

S30, compiling a reactor core physical program into a dynamic link library, and storing a physical model in the dynamic link library;

S40, calling a dynamic link library, and receiving the simulation result output by the reactor core physical program;

S50, calling a dynamic link library compiled by the thermal-hydraulic program, and receiving a simulation result output by the thermal hydraulic program;

S60, exchanging and transferring physical parameters between a reactor core physical program and a thermal hydraulic program;

And S70, establishing a mapping relationship between a reactor core physical program mesh and a thermal-hydraulic program mesh according to the material arrangement of the reactor core.

In some embodiments, before step S10, the method further comprises:

S00, obtaining a feedback value of section parameter information according to the state information of each fuel assembly;

S01, calculating the steady-state poison nucleon density at the initial moment of simulation, setting the steady-state poison nucleon density as the initial poison nucleon density, and calculating the transient poison nucleon density in real time in the simulation process;

S02, processing the section of the semi-inserted segment of the control rod to obtain the real state of the section reaction of the segment.

In some embodiments, the state information of the fuel assembly includes a base section coefficient, a coolant temperature fitting coefficient, a fuel temperature fitting coefficient, a boron concentration fitting coefficient and a coolant density fitting coefficient as well as the difference between the coolant temperature and a reference operating condition, the difference between the fuel temperature and the reference operating condition, the difference between boron concentration and the reference operating condition and the difference between coolant density and reference operating condition.

Specifically, in step S00, the calculation of the core physical program requires the section information, and the section parameter feedback calculation capability needs to be realized according to the status information of each component, and the section feedback formula is as follows:

$$\sum x, g = a_{1,x,g} + \sum_{n=1}^{2} a_{(n+1),x,g} (\Delta T_c)^n + \sum_{n=1}^{2} a_{(n+3),x,g} (\Delta\sqrt{T_f})^n +$$

$$\sum_{n=1}^{2} a_{(n+5),x,g} (\Delta ppm)^n + \sum_{n=1}^{2} a_{(n+7),x,g} (\Delta \rho_c)^n$$

In the above formula, $\Sigma x, g\Sigma$ represents the value of the macroscopic section X of the g-th group, $a_{1,x,g}$ represents the basic section coefficient, $a_{(n+1),x,g}$ represents the coolant temperature fitting coefficient, $a_{(n+3),x,g}a$ ( ( n + 3), X and G) represent the fuel temperature fitting coefficient, and $a_{(n+5)x,g}$ is the boron concentration fitting coefficient. The $a_{(n+7),x,g}a$ _ ( ( n + 7), X, G) represents the fitting coefficient representing the coolant density, $\Delta T_c \Delta$ T _ C represents the difference between the coolant temperature and the reference operating condition, $\Delta\sqrt{T_f}$ represents the difference between the fuel temperature and the reference operating condition, $\Delta ppm\Delta$ ppm represents the difference between the boron concentration and the reference operating condition, and $\Delta\rho_c\Delta$ ρ _ C represents the difference between the coolant density and the reference operating condition.

For the fuel assembly with control rod insertion, the section parameters need to add a residual term to the above formula, which is expressed as follows:

$$d\sum x, g = a_{1,x,g} + \sum_{n=1}^{2} a_{(n+1),x,g} (\Delta T_c)^n$$

In the above formula, d $\Sigma$ x, g represents the residual value of the g-th group macroscopic section X of the control rod compared with the fuel assembly.

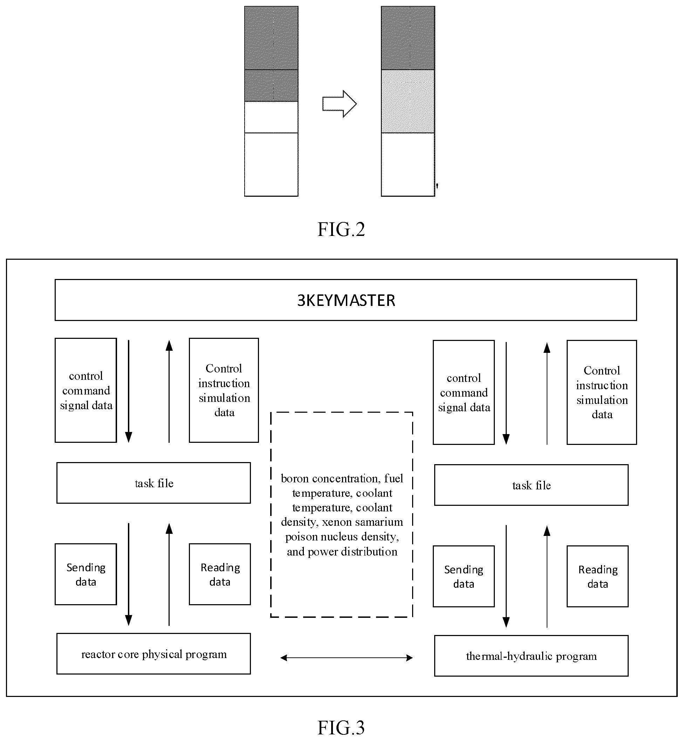

Specifically, in step S02, as shown in FIG. 2, a part of the control rod is inserted into the middle mesh on the left side in the figure, and a uniform cross section in the middle mesh on the right side is obtained after section processing.

Specifically, the section parameter information necessary for the neutron diffusion calculation is provided for step S10 through steps S00, S01, and S02.

Specifically, in step S30, the core physical program in step S20 is compiled into a dynamic link library, and the physics model is also stored in the dynamic link library. At the same time, the interface functions are reserved for the transfer of key physical parameter data. For a new core arrangement, a new core modeling can be directly carried out, and a new dynamic link library can be generated for application.

Specifically, in step S40, the dynamic link library of step S30 is called on the 3KEYMASTER platform through a task file written in C language, as shown in FIG. 3, and the core physical program can be interfaced with the 3KEYMASTER platform through an interface function.

In some embodiments, the physical parameters include boron concentration, fuel temperature, coolant temperature, coolant density, xenon samarium poison nucleus density, and power distribution.

Specifically, the 3KEYMASTER platform issues control command signal data to the task file, and the task file executes and sends data to the reactor core physical program. After the reactor core physical program finishes running, the task file will read and transmit the simulation results output by the reactor core physical program to the 3KEYMASTER platform.

Specifically, in step S50, the task file written by the C language calls the dynamic link library compiled by the thermal-hydraulic program to realize the docking between the thermal-hydraulic program and the 3 KEYMASTER platform, and the dynamic link library compiled by the thermal-hydraulic programs is already present in the original 3 KEYMASTER platform. As shown in FIG. 3, the 3KEYMASTER platform issues control command signal data to the task file, and the task file executes and sends data to the thermal-hydraulic program. After the thermal-hydraulic program finishes running, the task file will read and transmit the simulation results output by the thermal-hydraulics program to the 3KEYMASTER platform.

Specifically, the key physical parameters are exchanged through the "point table file" on the 3KEYMASTER platform through step S40 and step S50, so as to realize the key physical parameter transfer between the reactor core physical program and the thermal-hydraulic program.

In some embodiments, exchanging and transferring the physical parameters includes:
Transmitting the power distribution calculated by the core physical program i to the thermal-hydraulic program, and transmitting the boron concentration, fuel temperature distribution, coolant temperature distribution and coolant density distribution calculated by the thermal-hydraulic program are transferred to the reactor core physical program.

In some embodiments, exchanging and transferring the physical parameters comprising:
Transmitting the power distribution calculated by the core physical program to the thermal-hydraulic program, and transmitting the boron concentration, fuel temperature distribution, coolant temperature distribution and coolant density distribution calculated by the thermal-hydraulic program are transferred to the reactor core physical program.

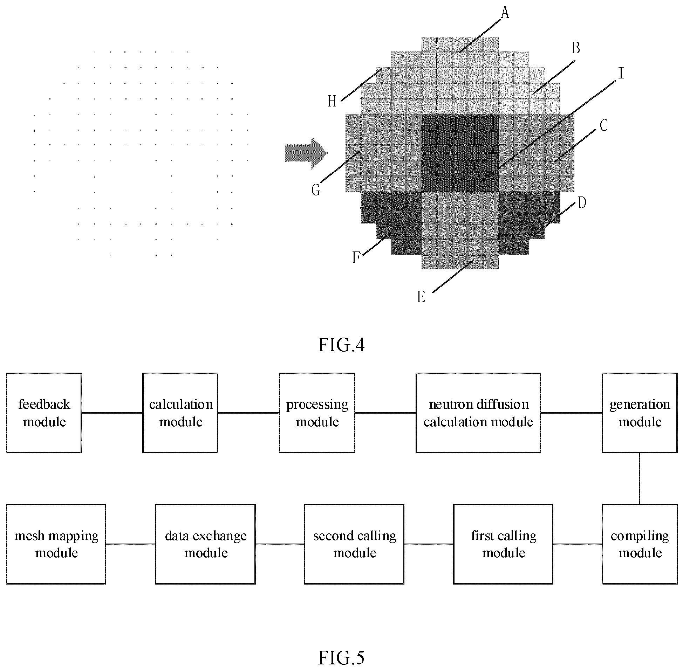

Specifically, the core arrangement of 177 assemblies is designed, and the mapping relationship between the reactor core physical program mesh and the thermal-hydraulic program mesh is shown in FIG. 4. Each assembly of the reactor core physical program corresponds to one mesh, and the thermal-hydraulic mesh radially divides the core into 9 regions, which are respectively divided into regions A to I. In the reactor core physical program mesh, each parameter is mapped in the thermal-hydraulic mesh in the form of a single mesh; and in the thermal-hydraulic program mesh, the parameters of one thermal-hydraulic program mesh are transmitted to all reactor core physical program meshs in the region.

In this embodiment, as shown in FIG. 5, the present invention further provides a neutronics/thermal-hydraulics coupling system for three-dimensional reactor core of pressurized water reactor, comprising:

a neutron diffusion calculation module is use for performing three-dimensional steady-state and transient-state neutron diffusion calculation by adopt a nonlinear iteration coarse mesh finite difference method and a θ-Methods according to section parameter information
a generation module is used for generating a reactor core physical program and establishing a corresponding physical model according to the material arrangement and the geometric dimension of the reactor core;
a compiling module is used for compiling the reactor core physical program into a dynamic link library and storing the physical model in the dynamic link library;
s first calling module is used for calling a dynamic link library and receiving and obtaining a simulation result output by a reactor core physical program;
s second calling module is used for calling a dynamic link library compiled by the thermal-hydraulic program and receiving the simulation result output by the thermal-hydraulic program;
a data exchange module is used for exchanging and transferring physical parameters between the reactor core physical program and the thermal-hydraulic program;

And a mesh mapping module is used for establishing a mapping relationship between the reactor core physical program mesh and the thermal-hydraulic program mesh according to the material arrangement of the reactor core.

In some embodiments, further comprising:

a feedback module is used for obtaining the feedback value of the section parameter information according to the state information of each fuel assembly;
a calculation module is used for calculating the steady-state poison nucleon density at the initial moment of simulation, setting the steady-state poison nucleon density as the initial poison nucleon density, and calculating the transient-state poison nucleon density in real time in the simulation process;

And a processing module is used for processing the section of the semi-inserted segment of the control rod to obtain the real state of the section reaction of the segment.

In some embodiments, the state information of the fuel assembly includes a base cross section coefficient, a coolant temperature fitting coefficient, a fuel temperature fitting coefficient, a boron concentration fitting coefficient, and a coolant density fitting coefficient as well as the difference between the coolant temperature and a reference operating condition, the difference between the fuel temperature and the reference operating condition, the difference between boron concentration and the reference operating condition and the difference between the coolant density and the reference operating condition.

Specifically, in the feedback module, the calculation of the reactor core physical program requires the section information, and the section parameter feedback calculation capability needs to be realized according to the status information of each component. The section feedback formula is as follows:

$$\sum x, g = a_{1,x,g} + \sum_{n=1}^{2} a_{(n+1),x,g} (\Delta T_c)^n + \sum_{n=1}^{2} a_{(n+3),x,g} (\Delta \sqrt{T_f})^n +$$

$$\sum_{n=1}^{2} a_{(n+5),x,g} (\Delta ppm)^n + \sum_{n=1}^{2} a_{(n+7),x,g} (\Delta \rho_c)^n$$

In the above formula, $\sum x, g \Sigma$ represents the value of macroscopic section X of the g-th group, $a_{1,x,g}$ _ (1, X, G) represents the basic section coefficient, $a_{(n+1)x,g}$ represents the fitting coefficient of coolant temperature, $a_{(n+3),x,g}$ _ ((n+3), X and G) represent the fitting coefficient of fuel temperature, the $a_{(n+5),x,g}$ _ ((m + 5) represents the boron concentration fitting coefficient, The $a_{(n+7),x,g}$ _ ((n + 7), X, G) represents the fitting coefficient representing the coolant density, $\Delta T_c \Delta T$ _

C represents the difference between the coolant temperature and the reference condition, $\Delta\sqrt{T_f}$ represents the difference between the fuel temperature and the reference condition, $\Delta ppm\Delta$ ppm represents the difference between the boron concentration and the reference condition, and $\Delta\rho_c\Delta_\rho\_C$ represents the difference between the coolant density and the reference operating condition.

For the fuel assembly with control rod insertion, the section parameters need to add a residual term to the above formula, which is expressed as follows:

$$\mathrm{d}\sum x, g = a_{1,x,g} + \sum_{n=1}^{2} a_{(n+1),x,g}\,(\Delta T_c)^n$$

In the above formula, d $\Sigma$ x, gd d represents the residual value of the g-th group macroscopic section X of the control rod compared with the fuel assembly.

Specifically, in the processing module, as shown in FIG. 2, some control rods are inserted into the middle mesh on the left side of the figure, and a uniform section in the middle mesh on the right side can be obtained after section processing.

Specifically, the section parameter information necessary for the neutron diffusion calculation is provided to the neutron diffusion calculation module through the feedback module, the calculation module, and the processing module.

Specifically, the compiling module compiles the reactor core physical program in the generating module into a dynamic link library, and stores the physics model in the dynamic link library. At the same time, the interface functions are reserved for the transfer of key physical parameter data. For a new reactor core arrangement, a new reactor core modeling can be carried out directly, and a new dynamic link library can be generated for application.

Specifically, the first calling module calls the dynamic link library of the compiling module through a task file written in C language on the 3 KEYMASTER platform, as shown in FIG. 3, and the reactor core physical program can be interfaced with the 3 KEYMASTER platform through an interface function.

In some embodiments, the physical parameters include boron concentration, fuel temperature, coolant temperature, coolant density, xenon samarium poison nucleus density, and power distribution.

Specifically, the 3KEYMASTER platform issues control command signal data to the task file, and the task file executes and sends data to the reactor core physical program. When the running of the reactor core physical program is finished, the task file will read and transmit the simulation results output by the reactor core physical program to the 3KEYMASTER platform.

Specifically, the second calling module calls a dynamic link library compiled by a thermal-hydraulic program through a task file written by a C language to realize the butt joint of the thermal-hydraulic program and the 3 KEYMASTER platform, and the dynamic link library compiled by the thermal-hydraulic program already exists in the original 3 KEYMASTER platform. As shown in FIG. 3, the 3KEYMASTER platform issues control command signal data to the task file, and the task file executes and sends data to the thermal-hydraulic program. After the thermal-hydraulic program finishes running, the task file will read and transmit the simulation results output by the thermal-hydraulic program to the 3KEYMASTER platform.

Specifically, key physical parameters are exchanged on a 3KEYMASTER platform through a point table file by a first calling module and a second calling module, so that key physical parameters of a reactor core physical program and a thermal-hydraulic program are transferred.

In some embodiments, exchanging the physical parameters includes:

The power distribution calculated by the core physical program is transferred to the thermal hydraulic program, and the boron concentration, fuel temperature distribution, coolant temperature distribution and coolant density distribution calculated by the thermal hydraulic program are transferred to the core physical program.

In some embodiments, the exchanging the physical parameter comprises:

The power distribution calculated by the reactor core physical program is transferred to the thermal-hydraulic program, and the boron concentration, fuel temperature distribution, coolant temperature distribution and coolant density distribution calculated by the thermal-hydraulic program are transferred to the reactor core physical program.

Specifically, the core arrangement of 177 assemblies is designed, and the mapping relationship between the reactor core physical program mesh and the thermal-hydraulic program mesh is shown in FIG. 4. Each assembly of the reactor core physical program corresponds to one mesh, and the thermal-hydraulic mesh radially divides the core into 9 regions, which are respectively divided into regions A to I. In the reactor core physical program mesh, each parameter is mapped in the thermal hydraulic mesh in the form of a single mesh; and in the thermal-hydraulic program mesh, the parameters of one thermal-hydraulic program mesh are transmitted to all reactor core physical program meshs in the region.

By implement that invention, the following beneficial effect are achieved:

The invention discloses a neutronics/thermal-hydraulics coupling method and system for a three-dimensional reactor core of a pressurized water reactor. Three-dimensional steady state and transient state neutron diffusion calculation is carried out on a pressurized water reactor simulation platform according to section parameter information to obtain a reactor core physical program, and a corresponding physical model is established according to the actual arrangement condition of the reactor core; Compiling a reactor core physical program into a dynamic link library, calling the dynamic link library to obtain a simulation result output by the reactor core physical program, calling the dynamic link library compiled by a thermal-hydraulic program, receiving the simulation result output by the thermal-hydraulic program, exchanging physical parameters of the simulation results in a platform, and realizing reactor core nuclear thermal coupling calculation of simulation.

The mapping relationship between the core physics code mesh and the thermal-hydraulic code mesh is obtained for the actual core arrangement. The reactor core physical program and the thermal-hydraulic program developed by the invention are externally coupled, so that the limitation that the reactor core physical program and the thermal-hydraulic program are coupled completely in a black box is broken, and geometric modeling and meshing can be carried out aiming at a specific reactor core, and functions are added to meet the requirements of simulation development of a pressurized water reactor.

It should be understood that the above embodiments only represent the preferred embodiments of the present invention, and the description is more specific and detailed, but it should not be understood as limiting the patent scope of the present invention; It should be noted that, for those of ordinary skill in the art, the above technical features can be freely combined, and several modifications and improvements can be made without departing from the concept of the present invention, which all fall within the scope of protection of the present invention; Accordingly, it is intended that all changes and modifications which come within the scope of the appended claims shall be construed accordingly.

**Claims**

1. A neutronics/thermal-hydraulics coupling method for three-dimensional reactor core of pressurized water reactor, applied to a PWR simulation platform, wherein comprising the following steps:

   S10, performing three-dimensional steady-state and transient-state neutron diffusion calculation by using a nonlinear iterative coarse-mesh finite difference method and a θ-Method according to section parameter information;

   S20, generating a reactor core physical program, and establishing a corresponding physical model according to the material arrangement and the geometric dimension of the reactor core;

   S30, compiling the reactor core physical program into a dynamic link library, and storing the physical model in the dynamic link library;

   S40, calling the dynamic link library, and receiving the simulation result output by the reactor core physical program;

   S50, calling a dynamic link library compiled by the thermal-hydraulic program, and receiving a simulation result output by the thermal-hydraulic program;

   S60, exchanging and transferring physical parameters between the reactor core physical program and the thermal-hydraulic program;

   S70, establishing a mapping relationship between the reactor core physical program mesh and the thermal-hydraulic program mesh according to the material arrangement of the reactor core.

2. The neutronics/thermal-hydraulics coupling method for three-dimensional reactor core of pressurized water reactor according to claim 1, wherein before step S10, the method further comprising:

   S00, obtaining a feedback value of the section parameter information according to the state information of each fuel assembly;

   S01, calculating the steady-state poison nucleon density at the initial moment of simulation, setting the steady-state poison nucleon density as the initial poison nucleon density, and calculating the transient-state poison nucleon density in real time in the simulation process;

   and S02, processing the section of the semi-inserted segment of the control rod to obtain the real state of the section reaction of the segment.

3. The neutronics/thermal-hydraulics coupling method for three-dimensional reactor core of pressurized water reactor according to claim 2, wherein the state information of the fuel assembly comprises a basic section coefficient, a coolant temperature fitting coefficient, a fuel temperature fitting coefficient, a boron concentration fitting coefficient, and a coolant density fitting coefficient; and a difference value between the coolant temperature and a reference operating condition, a difference value between the fuel temperature and the reference operating condition, a difference valve between the boron concentration and the reference operating condition as well as a difference valve between the coolant density and the reference operating condition.

4. The neutronics/thermal-hydraulics coupling method for three-dimensional reactor core of pressurized water reactor according to claim 2, wherein the processing the section of semi-inserted segment of the control rod comprising: obtaining a uniform section of the mesh region by subjecting the mesh region of the control rod at the insertion portion of the segment to section processing.

5. The neutronics/thermal-hydraulics coupling method for three-dimensional reactor core of pressurized water reactor of claim 1, wherein the physical parameters comprise boron concentration, fuel temperature, coolant temperature, coolant density, xenon samarium poison nucleus density and power distribution.

6. The neutronics/thermal-hydraulics coupling method for three-dimensional reactor core of pressurized water reactor according to claim 5, wherein the exchanging and transferring the physical parameters comprising: transmitting the power distribution calculated by the core physical program to the thermal-hydraulic program, and transmitting the boron concentration, the fuel temperature distribution, the coolant temperature distribution, and the coolant density distribution calculated by the thermal-hydraulic program to the reactor core physical program.

7. The neutronics/thermal-hydraulics coupling method for three-dimensional reactor core of pressurized water reactor according to claim 1, wherein the step of establishing a mapping relationship between the reactor core physical program mesh and the thermal-hydraulics program mesh comprising: Corresponding each component of the reactor core physical program to a mesh, dividing the reactor core into a plurality of regions radially by the thermal-hydraulic mesh, and mapping each parameter in the thermal-hydraulic mesh in the form of a single mesh in the reactor core physical program mesh;transmitting a parameter of the thermal-hydraulic program mesh to all the reactor core physical program meshs in the region in the thermal-hydraulic program mesh.

8. A neutronics/thermal-hydraulics coupling system for three-dimensional reactor core of pressurized water reactor, applied to a pressurized water reactor simulation platform, comprising:

 a neutron diffusion calculation module is used for performing three-dimensional steady-state and transient-state neutron diffusion calculation by using a nonlinear iteration coarse-mesh finite difference method and a θ-Method according to section parameter information
 a generation module is used for generating a reactor core physical program and establishing a corresponding physical model according to the material arrangement and the geometric dimension of the reactor core;
 a compiling module is used for compiling the reactor core physical program into a dynamic link library and storing the physical model in the dynamic link library;
 a first calling module is used for calling the dynamic link library and receiving the simulation result output by the reactor core physical program;
 a second calling module is used for calling a dynamic link library compiled from a thermal-hydraulic program, and receiving a simulation result output by the thermal-hydraulic program;
 a data exchange module is used for exchanging and transferring physical parameters between the reactor core physical program and the thermal-hydraulic program;
 and a mesh mapping module is used for establishing a mapping relationship between the reactor core physical program mesh and the thermal-hydraulic program mesh according to the material arrangement of the reactor core.

9. The neutronics/thermal-hydraulics coupling system for three-dimensional reactor core of pressurized water reactor according to claim 8, further comprising:

 a feedback module is used for obtaining a feedback value of the section parameter information according to the state information of each fuel assembly;
 a calculation module is used for calculating the steady-state poison nucleon density at the initial moment of simulation, setting the steady-state poison nucleon density as the initial poison nucleon density, and calculating the transient-state poison nucleon density in real time in the simulation process;
 and a processing module is used for processing the section of the semi-inserted segment of the control rod to obtain the real state of the section reaction of the segment.

10. The neutronics/thermal-hydraulics coupling system for three-dimensional reactor core of pressurized water reactor according to claim 9, wherein the state information of the fuel assembly comprises a basic section coefficient, a coolant temperature fitting coefficient, a fuel temperature fitting coefficient, a boron concentration fitting coefficient, and a coolant density fitting coefficient; and a difference value between the coolant temperature and a reference operating condition, a difference value between the fuel temperature and the reference operating condition, a difference valve between the boron concentration and the reference operating condition as well as a difference valve between the coolant density and the reference operating condition.

11. The neutronics/thermal-hydraulics coupling system for three-dimensional reactor core of pressurized water reactor of claim 9, wherein the processing module is further used for:
obtaining a uniform section of the mesh region by subjecting the mesh region of the control rod at the insertion portion of the segment to section processing.

12. The neutronics/thermal-hydraulics coupling system for three-dimensional reactor core of pressurized water reactor of claim 8, wherein the physical parameters include boron concentration, fuel temperature, coolant temperature, coolant density, xenon samarium poison nucleus density, and power distribution.

13. The neutronics/thermal-hydraulics coupling system for three-dimensional reactor core of pressurized water reactor of claim 12, wherein the exchanging and transferring the physical parameters comprising:
transmitting the power distribution calculated by the core physical program to the thermal-hydraulic program, and transmitting the boron concentration, the fuel temperature distribution, the coolant temperature distribution, and the coolant density distribution calculated by the thermal-hydraulic program to the core physical program.

14. The neutronics/thermal-hydraulics coupling system for three-dimensional reactor core of pressurized water reactor of claim 8, wherein the data exchange module is further used for:
Corresponding each component of the reactor core physical program to a mesh, dividing the reactor core into a plurality of areas radially by the thermal-hydraulic mesh, and mapping each parameter in the thermal-hydraulic mesh in the form of a single mesh in the reactor core physical program mesh; transmitting a parameter of the thermal-hydraulic program mesh to all the reactor core physical program meshs in the region in the thermal-hydraulic program mesh.

performing three-dimensional steady-state and transient-state neutron diffusion calculation by using a nonlinear iterative coarse-mesh finite difference method and a θ-Method according to section parameter information;

S10

generating a reactor core physical program, and establishing a corresponding physical model according to the material arrangement and the geometric dimension of the reactor core;

S20

compiling the reactor core physical program into a dynamic link library, and storing the physical model in the dynamic link library;

S30

calling the dynamic link library, and receiving the simulation result output by the reactor core physical program;

S40

calling a dynamic link library compiled by the thermal-hydraulic program, and receiving a simulation result output by the thermal-hydraulic program;

S50

exchanging and transferring physical parameters between the reactor core physical program and the thermal-hydraulic program;

S60

establishing a mapping relationship between the reactor core physical program mesh and the thermal-hydraulic program mesh according to the material arrangement of the reactor core.

S70

FIG.1

FIG.2

## 3KEYMASTER

| control command signal data | Control instruction simulation data | | control command signal data | Control instruction simulation data |

| task file |

boron concentration, fuel temperature, coolant temperature, coolant density, xenon samarium poison nucleus density, and power distribution

| task file |

| Sending data | Reading data | | Sending data | Reading data |

| reactor core physical program | | thermal-hydraulic program |

FIG.3

FIG.4

| feedback module | calculation module | processing module | neutron diffusion calculation module | generation module |
|---|---|---|---|---|

| mesh mapping module | data exchange module | second calling module | first calling module | compiling module |
|---|---|---|---|---|

FIG.5

## INTERNATIONAL SEARCH REPORT

| International application No. |
| --- |
| **PCT/CN2022/127785** |

### A. CLASSIFICATION OF SUBJECT MATTER

G06F 30/23(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, DWPI, CNTXT, ENTXT, ENTXTC, CNKI: 压水堆, 堆芯, 核热耦合, 中子扩散, 动态链接库, 热工水力, 参数, 网格, PWR, core, nuclear thermal coupling, neutron diffusion, dynamic link library, DLL, thermal power, parameter, grid

### C. DOCUMENTS CONSIDERED TO BE RELEVANT

| Category* | Citation of document, with indication, where appropriate, of the relevant passages | Relevant to claim No. |
| --- | --- | --- |
| A | CN 108846190 A (HARBIN ENGINEERING UNIVERSITY) 20 November 2018 (2018-11-20) entire document | 1-14 |
| A | CN 112906271 A (NUCLEAR POWER INSTITUTE OF CHINA) 04 June 2021 (2021-06-04) entire document | 1-14 |
| A | CN 113094947 A (XI'AN JIAOTONG UNIVERSITY) 09 July 2021 (2021-07-09) entire document | 1-14 |
| A | KR 101734289 B1 (KOREA ATOMIC ENERGY RESEARCH INSTITUTE) 24 May 2017 (2017-05-24) entire document | 1-14 |

☐ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **12 April 2023** | **18 April 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/127785**

| Patent document cited in search report | | | Publication date (day/month/year) | Patent family member(s) | | | Publication date (day/month/year) |
|---|---|---|---|---|---|---|---|
| CN | 108846190 | A | 20 November 2018 | CN | 108846190 | B | 12 April 2022 |
| CN | 112906271 | A | 04 June 2021 | CN | 112906271 | B | 11 February 2022 |
| CN | 113094947 | A | 09 July 2021 | CN | 113094947 | B | 28 October 2022 |
| KR | 101734289 | B1 | 24 May 2017 | | None | | |

Form PCT/ISA/210 (patent family annex) (July 2022)